# EUROPEAN PATENT APPLICATION

(11) **EP 2 381 361 A1**
(43) Date of publication of application: **26.10.2011**
(21) Application number: 11163448.1
(22) Date of filing: 21.04.2011
(51) Int. Cl.: G06F 9/445

(54) **Apparatus and method for firmware update in a portable terminal**

(30) Priority: 26.04.2010 KR 20100038405
(71) Applicant: SAMSUNG ELECTRONICS CO., LTD., Suwon-si, Gyeonggi-do (KR)
(72) Inventor: Lee, Kang-Soo, Gyeonggi-do (KR)
(74) Representative: Jenkins, Richard Gavin

(57) **Abstract**

An apparatus and method for downloading an update file using a Firmware Over The Air (FOTA) service of a portable terminal are provided. The apparatus includes a controller and a command analyzer. The controller processes to receive a device management command from an update server, the device management command including information indicating the execution or non-execution of update and checksum information for delta information, and performs the firmware update. The command analyzer analyzes the received device management command, and if update execution is necessary, the command analyzer determines if the delta information is information valid for the portable terminal based on the checksum information, before receiving the delta information.

## Description

### BACKGROUND OF THE INVENTION

### 1. Field of the Invention:

The present invention relates to an apparatus and method for downloading an update file using a Firmware Over The Air (FOTA) service of a portable terminal. More particularly, the present invention relates to an apparatus and method for, when updating firmware in a portable terminal, determining if data to be downloaded is data valid for the portable terminal before downloading the data, thereby preventing an unnecessary waste of resources.

### 2. Description of the Related Art:

In recent years, the use of portable terminals is increasing due to their convenience. Accordingly, service providers (i.e., system manufacturers) are competitively developing portable terminals having more convenient functions to increase their user base.

For example, portable terminals are providing functions of a phone book, a game, a scheduler, a Short Message Service (SMS), a Multimedia Message Service (MMS), a Broadcast Message Service (BMS), an Internet service, an electronic mail (e-mail) service, a morning wakeup call, a Motion Picture Expert Group (MPEG)-1 or MPEG-2 Audio Layer-3 (MP3) player, a digital camera, and other similar products and services.

The above function operates based on an Operating System (OS). The OS is generally operated through firmware. The firmware refers to a program, which stores, in a Read Only Memory (ROM), kernel software having no need to alter data or information and the like and is used like hardware. This firmware can be developed into a new version even after the release of products for the sake of stable performance and bug correction of portable terminals. When a new version of the firmware is developed, users of the portable terminals can update the firmware of the portable terminals. The user can update the firmware of the portable terminals using various methods, such as a wired or wireless method. Wireless firmware update methods are currently under development. A representative example is a Firmware Over The Air (FOTA) service.

The FOTA service updates firmware by comparing an existing firmware with a new-version firmware and providing, through a wireless network, delta information (i.e., a delta file) that is an extraction of the portions of the new-version firmware that differ from the existing firmware.

After receiving a notification packet (PKG#0) from an update server and performing communication connection with the update server, the portable terminal determines a notification for performing the FOTA service through a plurality of signals.

When the notification for performing the FOTA service is included in the notification packet (PKG#0), the portable terminal downloads delta information for FOTA service execution and stores the delta information in the update server or, according to need, a contents server of a manufacturer or service provider. If storage is completed, the portable terminal performs firmware update using the delta information.

Before performing the firmware update, the portable terminal determines if the received delta information is delta information applicable to (i.e., valid for) the portable terminal. When the delta information is the delta information applicable to the portable terminal, the portable terminal can perform the firmware update, but when the delta information is not applicable to the portable terminal, the portable terminal notifies an update server of update failure.

When the received delta information is not the delta information applicable to the portable terminal as above, it is a situation in which the portable terminal receives unnecessary delta information, so a needless data fee is incurred and, as a result, a waste of wireless resources occurs. After receiving delta information, a conventional portable terminal determines if the received delta information is applicable to itself, but a waste of resources dependent on delta information reception takes place.

In order to address the above problem, there is a need for an apparatus and method for, before delta information reception, determining if there is delta information valid for the portable terminal in the portable terminal.

### SUMMARY OF THE INVENTION

Aspects of the present invention are to address at least the above-mentioned problems and/or disadvantages and provide at least the advantages described below. Accordingly, an aspect of the present invention is to provide an apparatus and method for preventing the generation of unnecessary accounting dependent on a Firmware Over The Air (FOTA) service in a portable terminal.

Another aspect of the present invention is to provide an apparatus and method for, after determining if there is valid delta information, receiving only the valid delta information in a portable terminal.

Another aspect of the present invention is to provide an apparatus and method for generating checksum information for use in determining the validity of delta information in order to prevent the generation of unnecessary accounting dependent on an FOTA service in an update server.

The above aspects are achieved by providing an apparatus and method for firmware update in a portable terminal.

In accordance with an aspect of the present invention, an apparatus for performing firmware update in a portable terminal is provided. The apparatus includes a controller and a command analyzer. The controller processes to receive a device management command from an update server, the device management command including information indicating the execution or non-execution of a firmware update and checksum information for delta information, and performs the firmware update. The command analyzer analyzes the received device management command, and if update execution is necessary, the command analyzer determines if the delta information is information valid for the portable terminal based on the checksum information, before receiving the delta information.

In accordance with another aspect of the present invention, an apparatus for performing firmware update in an update server is provided. The apparatus includes a command generator and a server controller. The command generator inserts information indicating the execution or non-execution of a firmware update and checksum information for delta information, into a device management command to be transmitted to a portable terminal. The server controller processes to transmit the device management command including the update execution or non-execution information, to the portable terminal.

In accordance with another aspect of the present invention, a mobile communication system for performing firmware update is provided. The system includes an update server and a portable terminal. The update server transmits a device management command to a portable terminal, device management command including information indicating the execution or non-execution of a firmware update and checksum information for delta information. The portable terminal receives the device management command including the update execution or non-execution notifying information and the checksum information for the delta information from the update server and, before receiving the delta information, determines whether the delta information is valid for the portable terminal.

In accordance with another aspect of the present invention, a method for performing firmware update in a portable terminal is provided. The method includes receiving a device management command from an update server, the device management command including information indicating the execution or non-execution of a firmware update and checksum information for delta information, before receiving the delta information, analyzing the received device management command, and if update execution is necessary, determining whether the delta information is information valid for the portable terminal based on the checksum information.

In accordance with another aspect of the present invention, a method for performing firmware update in an update server is provided. The method includes inserting information indicating the execution or non-execution of a firmware update and checksum information for delta information, into a device management command to be transmitted to a portable terminal, and transmitting the device management command including the update execution or non-execution notifying information, to the portable terminal.

In accordance with another aspect of the present invention, a method for firmware update in a mobile communication system is provided. The method includes transmitting a device management command to a portable terminal, the device management command including information indicating the execution or non-execution of update and checksum information for delta information, and receiving the device management command including the update execution or non-execution notifying information and the checksum information for the delta information from the update server and, before receiving the delta information, determining whether the delta information is valid for the portable terminal.

In accordance with another aspect of the present invention, a portable terminal is provided. The portable terminal includes a storage unit for storing a firmware for operating the portable terminal, a communication unit for receiving a device management command from an update server and for selectively receiving firmware update information from the update server, the device management command including information indicating whether to perform a firmware update and checksum information relating to delta information, and a controller for determining, based on the device management command, that the delta information relates to a firmware update applicable to the portable terminal, and, when the delta information relates to the applicable firmware update, for controlling the communication unit to receive the firmware update information, and for updating the firmware stored in the storage unit based on the received firmware update information.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram illustrating a construction of a mobile communication system for preventing the generation of unnecessary accounting dependent on a Firmware Over The Air (FOTA) service according to an exemplary embodiment of the present invention;

FIG. 2 is a diagram illustrating a construction of a device management command according to an exemplary embodiment of the present invention;

FIG. 3 is a flowchart illustrating a process of transmitting delta information in an update server according to an exemplary embodiment of the present invention; and

FIG. 4 is a flowchart illustrating a process of receiving delta information and performing firmware update in a portable terminal according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding, but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but are merely used by the inventor to enable a clear and consistent understanding of the invention. Accordingly, it should be apparent to those skilled in the art that the following description of exemplary embodiments of the present invention is provided for illustration purposes only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Exemplary embodiments of the present invention provide an apparatus and method for, at firmware update in a portable terminal, determining if data to be received is data valid for itself before receiving the data, thereby preventing the generation of unnecessary accounting dependent on a Firmware Over The Air (FOTA) service.

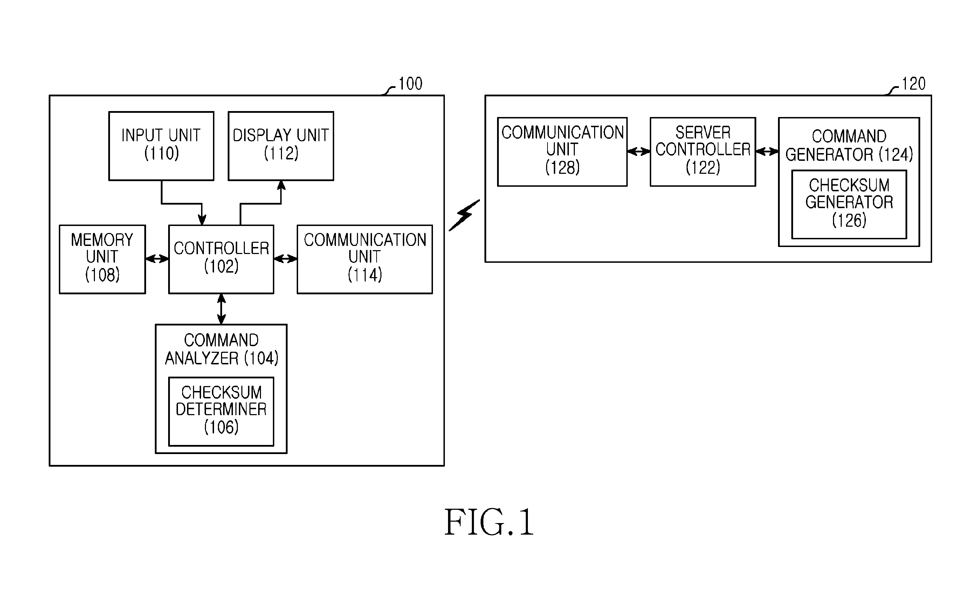

FIGs. 1 through 4, described below, and the various exemplary embodiments of the present invention provided are by way of illustration only and should not be construed in any way that would limit the scope of the present invention. Those skilled in the art will understand that the principles of the present disclosure may be implemented in any suitably arranged communications system. The terms used to describe various exemplary embodiments of the present invention are provided merely to aid the understanding of the description, and their use and definitions in no way limit the scope of the invention. Terms first, second, and the like are used to differentiate between objects having the same terminology and are in no way intended to represent a chronological order, unless where explicitly state otherwise. A set is defined as a non-empty set including at least one element.

FIG. 1 is a block diagram illustrating a construction of a mobile communication system for preventing the generation of unnecessary accounting dependent on an FOTA service according to an exemplary embodiment of the present invention.

Referring to FIG. 1, the mobile communication system can include a portable terminal 100 and an update server 120. The portable terminal 100 includes a controller 102, a command analyzer 104, a memory unit 108, an input unit 110, a display unit 112, and a communication unit 114. The command analyzer 104 can further include a checksum determiner 106. The portable terminal may include additional units that are not illustrated here merely for sake of clarity. Similarly, the functionality of two or more of the above units may be integrated into a single component. While many of the above units may be implemented in software, the units may also be implemented as hardware or as combinations of hardware and software. Moreover, it would be understood to a person of ordinary skill that many components of the portable terminal 100 (including components not shown in FIG. 1) would be required to be implemented at least partially in hardware in order for their functions to be carried out.

The controller 102 controls general operations of the portable terminal 100. For example, the controller 102 performs processing and control for voice call and data communication. In addition to these general functions, when receiving a device management command from the update server 120, the controller 102 processes to analyze information included in the device management command and to determine if there is delta information valid for the portable terminal 100. The controller 102 processes to download only the valid delta information and update firmware. This prevents the generation of unnecessary accounting and a waste of wireless resources as compared to an existing firmware update scheme in which the controller 102 receives delta information arising from FOTA and determines if firmware update is possible.

In order to prevent the generation of unnecessary accounting and a waste of wireless resources resulting from FOTA as described above, when receiving a device management command from the update server 120, the controller 102 analyzes information included in the device management command and determines if the information includes a notification of FOTA. In this fashion, the controller 102 determines whether to perform an FOTA service at the same time of the device management command reception.

When the controller 102 determines that the FOTA service is to be performed, the controller 102 determines a checksum for delta information included in the device management command and determines if delta information to be received is delta information valid for the portable terminal 100.

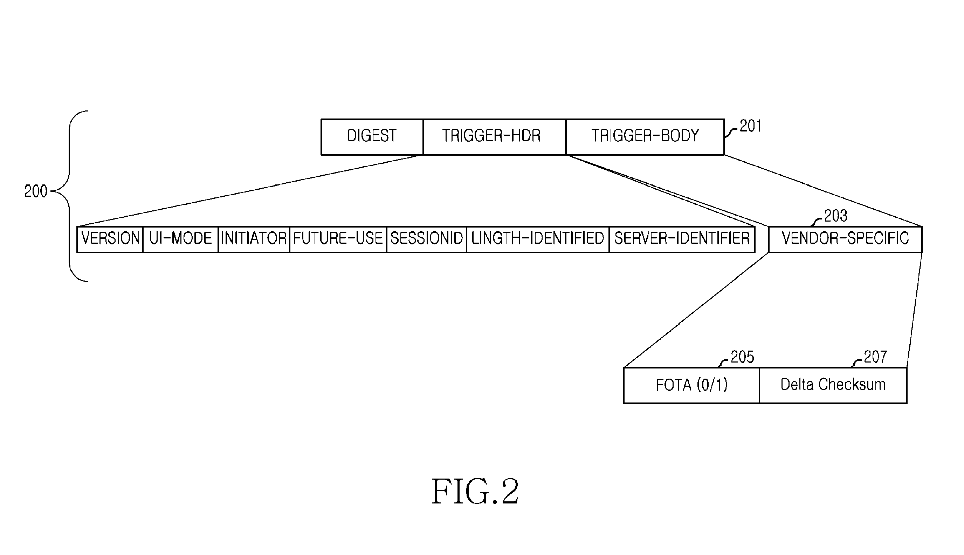

The command analyzer 104 determines if a program of updating the firmware of the portable terminal 100 exists using the delta file of the device management command received from the update server 120. The command analyzer 104 analyzes the received device management command and determines if the received device management command is a command for performing an FOTA service, i.e., determines if the portable terminal has received a notification packet including information for performing the FOTA service. When the command analyzer 104 determines that the received device management command is the command for performing the FOTA service, the command analyzer 104 determines if delta information to be received is delta information valid for the portable terminal 100. The command analyzer 104 determines update execution notifying information (205 of FIG. 2) of the device management command, thereby determining if the received device management command is the command for performing the FOTA service.

The checksum determiner 106 of the command analyzer 104 determines checksum information of the device management command received from the update server 120 and determines if the delta information to be received is delta information valid for the portable terminal 100.

The memory unit 108 includes a Read Only Memory (ROM), a Random Access Memory (RAM), a flash ROM, or other similar storage devices. The ROM stores a microcode of a program for processing and controlling the controller 102 and the command analyzer 104 and a variety of kinds of reference data.

The RAM, a working memory of the controller 102, stores temporary data generated in execution of a variety of programs. The flash ROM stores several types of data, such as a phone book, an outgoing message, an incoming message, and the like.

The input unit 110 includes numeral key buttons '0' to '9', a menu button, a cancel button, an OK button, a talk button, an end button, an Internet button, navigation key buttons, a plurality of function keys such as a character input key, and other similar input keys and buttons. The input unit 110 provides key input data corresponding to a key pressed by a user to the controller 102.

The display unit 112 displays state information generated during the operation of the portable terminal 100, limited number of characters, a large amount of moving pictures and still pictures, and the like. The display unit 112 can be a color Liquid Crystal Display (LCD), an Active Mode Organic Light Emitting Diode (AMOLED) display, and other similar display apparatuses. When the display unit 112 includes a touch input device and is applied to a portable terminal of a touch input scheme, the display unit 112 can be used as an input device of the portable terminal.

The communication unit 114 transmits/receives and processes a wireless signal of data input/output through an antenna (not illustrated). For example, in a transmission mode, the communication unit 114 processes original data through channel coding and spreading, converts the original data into a Radio Frequency (RF) signal, and transmits the RF signal. Similarly, in a reception mode, the communication unit 114 converts a received RF signal into a baseband signal, processes the baseband signal through de-spreading and channel decoding, and restores the signal to original data. According to exemplary embodiments of the present invention, the communication unit 114 receives information indicating the execution or non-execution of firmware update, and information indicating delta information valid for the portable terminal 100.

A role of the command analyzer 104 can be implemented by the controller 102 of the portable terminal 100. However, these are separately constructed and shown herein as an exemplary construction for description convenience, and not to limit the scope of the present invention. It would be understood by those skilled in the art that various modifications of construction can be made within the scope of the present invention. For example, construction can also be such that all of these functions are processed in the controller 102.

The update server 120 includes a server controller 122, a command generator 124, and a communication unit 128. The command generator 124 may further include a checksum generator 126.

The server controller 122 controls general operations of the update server 120. When firmware update is needed, the server controller 122 processes to generate delta information and then to transmit, to the portable terminal 100, a device management command that is a notification packet indicating that the delta information exists. In addition, the server controller 122 includes information indicating FOTA service execution or non-execution in the device management command at the time of generating the device management command such that the portable terminal 100 determines the FOTA service execution or non-execution at the time of receiving the device management command, and generates checksum information of the delta information such that the portable terminal 100 determines if the delta information is delta information valid for the portable terminal 100.

Under the control of the server controller 122, the command generator 124 marks, by '1', a bit of update execution notifying information (205 of FIG. 2) of the device management command and allows performing an FOTA service. Under the control of the server controller 122, the checksum generator 126 generates a checksum for delta information and adds the generated checksum to the checksum information (207 of FIG. 2) of the device management command.

The communication unit 128 communicates with the portable terminal 100, and transmits the device management command and delta information generated according to the present invention, to the portable terminal 100.

A role of the command generator 124 may be implemented by the server controller 122. However, these are separately constructed and shown in the present invention as an exemplary construction for description convenience, and not to limit the scope of the present invention. It would be understood by those skilled in the art that various modifications of construction can be made within the scope of the present invention. For example, construction can also be such that all of these functions are processed in the server controller 122.

The above description is made for an apparatus for, at firmware update in a portable terminal according to exemplary embodiments of the present invention, determining if data to be downloaded is data valid for the portable terminal before receiving the data to be downloaded, thereby preventing the generation of unnecessary accounting dependent on an FOTA service. A method for preventing the generation of unnecessary accounting dependent on an FOTA service is described below.

FIG. 2 is a diagram illustrating a construction of a device management command according to an exemplary embodiment of the present invention.

Referring to FIG. 2, the device management command may, as illustrated, include adding information 205 indicating the execution or non-execution of update and checksum information 207 for delta information, to a general notification packet structure 200.

The update execution or non-execution notifying information 205 is information permitting the portable terminal 100 to determine FOTA service execution or non-execution upon receiving the device management command from the update server 120. The update execution or non-execution notifying information 205 is marked with a bit '1' to notify FOTA service execution, and is marked with a bit '0' to notify FOTA service non-execution.

The checksum information 207 for the delta information is used by the portable terminal 100 to determine the validity of the delta information. The update execution or non-execution notifying information 205 and the checksum information 207 for delta information may include a 'vendor specific' field 203 included in a body 201 of the device management command.

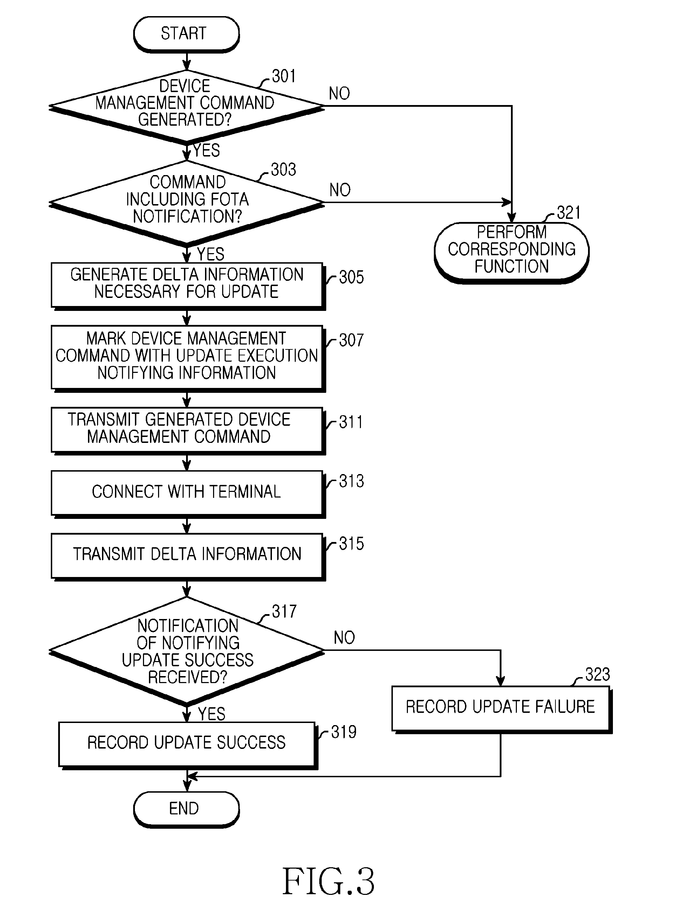

FIG. 3 is a flowchart illustrating a process of transmitting delta information in an update server according to an exemplary embodiment of the present invention.

Referring to FIG. 3, in step 301, the update server determines whether to generate a device management command. The device management command refers to a command for altering settings of an application such as a Multimedia Message Service (MMS), an e-mail, a Wireless Application Protocol (WAP), and the like or replacing a background picture and a reception sound according to need, and a command for performing FOTA.

When the update server determines that the device management command is not generated in step 301, the update server performs a corresponding function (e.g., another function, such as a wait mode) in step 321.

On the other hand, when the update server determines that the device management command is generated in step 301, the update server determines if the generated device management command is a command including an FOTA notification in step 303.

When the update server determines that the generated device management command is not the command including the FOTA notification in step 303, the update server performs a corresponding function in step 321 (e.g., another function, such as generating a command for altering MMS settings).

On the other hand, when the update server determines that the generated device management command is the command including the FOTA notification in step 303, the update server generates delta information (i.e., a delta file) necessary for update in step 305. The delta information, which is a file updating the firmware of a portable terminal, refers to a file generated by extracting only a different portion through a comparison between an existing firmware version (i.e., a firmware version with a bug generated) of the portable terminal and a new firmware version (i.e., a firmware version with a bug corrected). The update server can include, in a notification packet (PKG#0), information indicating the existence of the delta information, and transmit the notification packet (PKG#0) to the portable terminal.

Generally, when the update server transmits a notification packet including information indicating the existence of delta information as above, the portable terminal receiving the notification packet connects with the update server, downloads the delta information, and performs a firmware update process.

However, the portable terminal cannot determine if delta information to be received (i.e., delta information pushed to many and unspecific) is delta information necessary for the portable terminal, before receiving the delta information. As a result, the portable terminal receives unnecessary delta information, performs an update process, and, according to the result, determines if the delta information is unnecessary, thus wasting wireless resources.

In order to address the above issue, the update server marks a device management command with update execution notifying information (205 of FIG. 2) in step 307. The update execution notifying information is information for, upon receiving a notification packet, permitting the portable terminal to determine that the received notification packet is a notification packet for performing an FOTA service. Using the update execution notifying information, the portable terminal receiving the notification packet can determine that the received notification packet is the notification packet for performing the FOTA service, faster than a conventional method of performing communication connection with the update server, transmitting/receiving a plurality of data, and then determining that delta information for an FOTA service exists.

The update server generates a checksum for delta information to be used for the portable terminal to determine the validity of the delta information and adds the generated checksum to the device management command. In step 311, the update server transmits the device management command including the above information, to the portable terminal.

Upon receiving the device management command, the portable terminal determines information indicating FOTA service execution or non-execution and, in case of performing an FOTA service, analyzes the checksum for the delta information and determine if there is delta information valid for the portable terminal.

In step 313, the update server connects with the portable terminal and transmits the delta information to the portable terminal in step 315.

In step 317, the update server determines if the update server has received a notification of update success from the portable terminal.

If the update server has not received the notification update success within a specific time, or the update server receives a notification of update failure in step 317, the update server records the update failure in step 323.

When the update server receives the notification of update success in step 317, the update server records the update success in step 319.

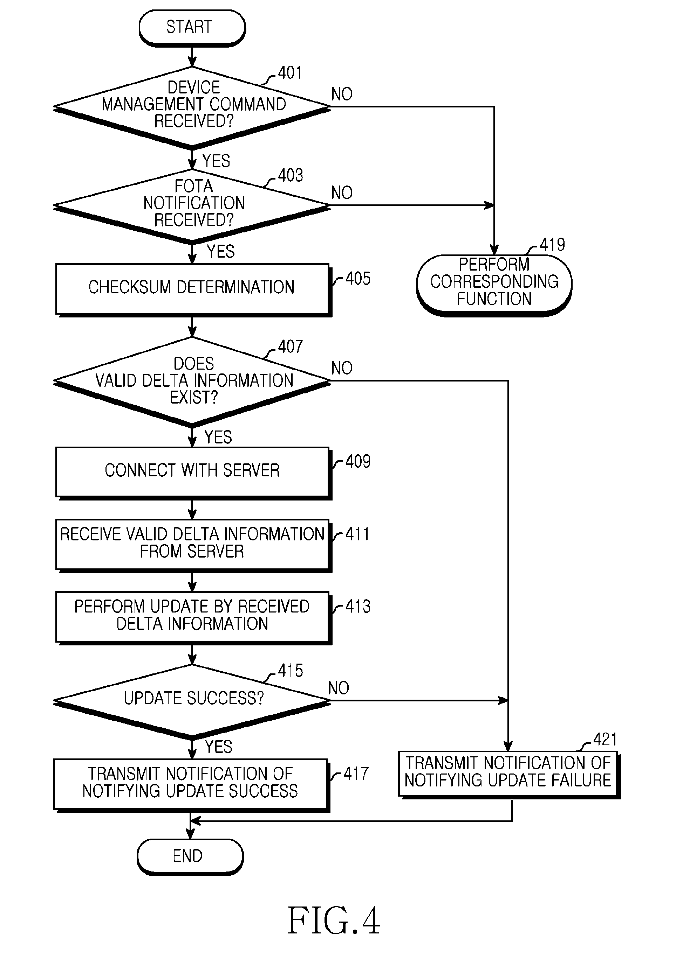

FIG. 4 is a flowchart illustrating a process of receiving delta information and performing firmware update in a portable terminal according to an exemplary embodiment of the present invention.

Referring to FIG. 4, in step 401, the portable terminal determines if it received a device management command from an update server.

When the portable terminal has not received the device management command in step 401, the portable terminal performs a corresponding function in step 419 (e.g., another function, such as a wait mode).

On the other hand, when the portable terminal has received the device management command in step 401, the portable terminal determines if it has received a notification of an FOTA service in step 403. The portable terminal analyzes update execution notifying information (205 of FIG. 2) included in the device management command received in step 401, thereby determining if the portable terminal has received the notification of the FOTA service.

Upon receiving the device management command from the update server, the portable terminal can determine if it should perform the FOTA service. For example, when a bit of the update execution notifying information included in the received device management command is equal to '1', the portable terminal determines that it has received the notification of the FOTA service, and, when the bit of the update execution notifying information included in the received device management command is equal to '0', the portable terminal can determine that it has not received the notification of the FOTA service.

When the portable terminal determines that the notification of the FOTA service has not been received in step 403, the portable terminal performs a corresponding function in step 419 (e.g., another function, such as an operation for a device management command).

When the portable terminal determines that the notification of the FOTA service has not been received in step 403, the portable terminal performs checksum determination in step 405. The checksum determination is to perform the FOTA service and determine if delta information to be received is delta information valid for the portable terminal. The portable terminal determines the validity of delta information using checksum information (207 of FIG. 2) included in the device management command received in step 401.

In step 407, the portable terminal determines the determination result of step 405. When the portable terminal determines that valid delta information does not exist in step 407, the portable terminal transmits a notification of update failure to the update server in step 507.

When the portable terminal determines that valid delta information exists in step 407, the portable terminal connects with the update server in step 409 and receives the valid delta information from the update server in step 411.

In step 413, the portable terminal performs a firmware update process using the received delta information and determines if the firmware update process succeeds in step 415.

When the portable terminal determines that the firmware update process fails in step 415, the portable terminal transmits a notification of update failure to the update server in step 421.

On the other hand, when the portable terminal determines that the firmware update process succeeds in step 415, the portable terminal transmits a notification of update success to the update server in step 417.

As described above, exemplary embodiments of the present invention relate to an apparatus and method for preventing the generation of unnecessary accounting dependent on an FOTA service in a portable terminal and, when updating firmware, determining if data to be downloaded is data valid for the portable before downloading the data, thereby preventing reception of data invalid for the portable terminal.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. An apparatus for performing firmware update in a portable terminal, the apparatus comprising:
a controller (102) for processing to receive a device management command from an update server, the device management command including information indicating the execution or non-execution of update and checksum information for delta information, and for performing the firmware update; and
a command analyzer (104) for analyzing the received device management command, and if update execution is necessary, for determining if the delta information is information valid for the portable terminal based on the checksum information, before receiving the delta information,.

2. The apparatus of claim 1, wherein, if the command analyzer determines that the delta information is the information valid for the portable terminal, the controller (102) processes to communicate with the update server and receive the delta information and, if the delta information is not the information valid for the portable terminal, the controller processes not to receive the delta information.

3. The apparatus of claim 1, wherein the device management command uses a notification packet (PKG#0).

4. An apparatus for performing firmware update in an update server, the apparatus comprising:
a command generator (124) for inserting information indicating the execution or non-execution of a firmware update and checksum information for delta information, into a device management command to be transmitted to a portable terminal; and
a server controller (122) for processing to transmit the device management command including the update execution or non-execution notifying information, to the portable terminal,

5. The apparatus of claim 4, wherein the command generator inserts the update execution or non-execution information into the device management command so as to allow the portable terminal to determine Firmware Over The Air (FOTA) service execution or non-execution upon receiving the device management command.

6. The apparatus of claim 4, wherein the command generator (124) generates the delta information to be transmitted to the portable terminal, and generates the checksum for the generated delta information.

7. The apparatus of claim 4, wherein, after transmitting the device management command, if the server controller receives a notification of update success from the portable terminal, the server controller (122) records the update success and, if the server controller receives a notification of update failure from the portable terminal, the server controller records the update failure.

8. A method for performing firmware update in a portable terminal, the method comprising:
receiving a device management command from an update server, the device management command including information indicating the execution or non-execution of a firmware update and checksum information for delta information;
before receiving the delta information, analyzing the received device management command; and
if update execution is necessary, determining whether the delta information is information valid for the portable terminal based on the checksum information.

9. The method of claim 8, further comprising:
communicating with the update server and receiving the delta information when the delta information is the information valid for the portable terminal; and
not receiving the delta information when the delta information is not the information valid for the portable terminal.

10. The method of claim 8, wherein the device management command uses a notification packet (PKG#0).

11. A method for performing firmware update in an update server, the method comprising:
inserting information indicating the execution or non-execution of a firmware update and checksum information for delta information, into a device management command to be transmitted to a portable terminal; and
transmitting the device management command including the update execution or non-execution information, to the portable terminal.

12. The method of claim 11, wherein the inserting of the update execution or non-execution information in the device management command to be transmitted to the portable terminal comprises inserting information to permit the portable terminal to determine Firmware Over The Air (FOTA) service execution or non-execution upon receiving the device management command.

13. The method of claim 11, wherein the inserting of the checksum information for the delta information into the device management command to be transmitted to the portable terminal comprises:
generating the delta information to be transmitted to the portable terminal; and
generating the checksum for the generated delta information.

14. The method of claim 11, further comprising:
after transmitting the device management command, when receiving a notification of update success from the portable terminal, recording the update success; and
if receiving a notification of an update failure from the portable terminal, recording the update failure.
